# EUROPEAN PATENT APPLICATION

(11) **EP 3 968 227 A1**
(43) Date of publication of application: **16.03.2022**
(21) Application number: 20195657.0
(22) Date of filing: 11.09.2020
(51) Int. Cl.: G06K 19/07, G06K 17/00

(54) **DEVICE AND METHOD OF DETECTING WATER CONTENTS OF PLANTS BY USING RFID SIGNAL**

(71) Applicant: Graphene Security Limited, Manchester M13 9PL (GB)
(72) Inventor: WANG, GUO-HAO, JIMO CITY, SHANDONG PROVINCE (CN); LAI, CHUNG- PING, 302 HSINCHU COUNTY (TW)
(74) Representative: Cabinet Chaillot

(57) **Abstract**

A method of detecting water contents of plants by using a RFID signal contains steps of: A1) connecting a humidity sensor with a radio frequency identification (RFID) chip (21) of an ultra-high frequency (UHF) RFID tag; A2) moving the humidity sensor close to the plants; A3) reading humidity signals of the humidity sensor successively by way of the RFID chip (21); A4) comparing a change of the humidity signals by using the RFID chip (21), wherein when the change of the humidity signals happens, a first state value of a state tag stored in the RFID chip (21) is changed to a second state value, wherein the first state value is a digital signal (0), and the second state is a digital signal (1); and A5) reading the state values of the RFID chip (21) by way of a RFID reader, and when one of the state values is the second state value, an abnormal signal of the water contents produces.

## Description

### FIELD OF THE INVENTION

The present invention relates to a radio frequency identification (RFID), and more particularly to a device and a method of detecting water contents of plants by using a RFID signal.

### BACKGROUND OF THE INVENTION

Conventional methods of testing water contents of soils contain:
1) drying, wherein soils are dried and measured a weight thereof, thus obtaining a water content. But this method cannot measure the water content of the soils successively.
2) measuring soil matrix potential and a water content of the soils by way of a tensiometer.
3) measuring a water content on a soil surface by way of infrared reflection, wherein a satellite is applied to control and measure the water content of the soil surface of large size.
4) dielectric, wherein a sensor is configured to contact with the soils, and the soils are used as the dielectric, thus producing a loop. The water contents of the soils are measured based on different conductivities of the water contents. In addition, the dielectric of the soils are measured by way of frequency domain reflectometry (FDR), time domain reflectometry (TDR), and capacitance.

The present invention has arisen to mitigate and/or obviate the aforedescribed disadvantages.

### SUMMARY OF THE INVENTION

The primary objective of the present invention is to provide a device and a method of detecting water contents of plants by using a RFID signal which are capable of recording and managing the water contents of the plants.

To obtain above-mentioned objective, a method of detecting water contents of plants by using a RFID signal provided by the present invention contains steps of:
A1) connecting a humidity sensor with a radio frequency identification (RFID) chip of an ultra-high frequency (UHF) RFID tag;
A2) moving the humidity sensor close to the plants;
A3) reading humidity signals of the humidity sensor successively by way of the RFID chip;
A4) comparing a change of the humidity signals by using the RFID chip, wherein when the change of the humidity signals happens, a first state value of a state tag stored in the RFID chip is changed to a second state value; and
A5) reading the state values of the RFID chip by way of a RFID reader, and when one of the state values is the second state value, an abnormal signal of the water contents produces.

Preferably, the humidity sensor is a capacitive humidity sensor, and the change of the humidity signals is a change of capacitance value signals of the capacitive humidity sensor.

Preferably, the humidity sensor is a resistive humidity sensor, and the change of the humidity signals is a change of resistance value signals of the resistive humidity sensor.

Preferably, the first state value is a digital signal, and the second state is a digital signal.

A device of detecting water contents of plants by using a RFID signal provided by the present invention contains: a humidity sensor, an ultra-high frequency (UHF) radio frequency identification (RFID) tag, and a RFID reader.

The humidity sensor is electrically connected with a RFID chip of the UHF RFID tag, the RFID chip reads humidity signals detected by the humidity sensor and compares a change of the humidity signals, wherein when the change of the humidity signals happens, a first state value of a state tag stored in the RFID chip is changed to a second state value, the RFID reader reads the state values of the RFID chip successively, and when one of the state values is the second state value, an abnormal signal of the water contents produces.

Preferably, the humidity sensor is a capacitive humidity sensor, and the change of the humidity signals is a change of capacitance value signals of the capacitive humidity sensor.

Preferably, the humidity sensor is a resistive humidity sensor, and the change of the humidity signals is a change of resistance value signals of the resistive humidity sensor.

Preferably, the first state value is a digital signal, and the second state is a digital signal.

In another embodiment, a method of detecting water contents of plants by using a RFID signal contains steps of:
B1) attaching an ultra-high frequency (UHF) radio frequency identification (RFID) tag on the plants, wherein the UHF RFID tag has multiple identification (ID) codes of the plants stored therein;
B2) using a minimum activation power of the UHF RFID tag as an output power;
B3) starting the UHF RFID tag by way of a RFID reader in a fixed reading frequency of and the output power;
B4) increasing the output power when the UHF RFID tag is not started and repeating the step of B3); or
B5) reading the multiple ID codes of the plants stored in the UHF RFID tag;
B6) calculating a deviation between the output power and the minimum activation power of the UHF RFID tag; and
B7) recording an abnormality between a respective ID code and a water content of a respective plant, when the deviation is within a predetermined range.

The method may further contain a step of fixing the RFID reader on an unmanned aerial vehicle (UAV) so that the UAV carries the RFID reader to a growing area of the plants, and the RFID reader executes the steps B2) to B7).

Preferably, a predetermined range of the deviation is 5 db to 18 db.

A device for executing the above-mentioned method contains: the UHF RFID tag and the RFID reader. The UHF RFID tag has the multiple ID codes of the plants stored therein, and the RFID reader has a microprocessor (MCU) configured to execute the steps B2) to B7).

The device may further contain an unmanned aerial vehicle (UAV). The RFID reader is fixed on the UAV so that the UAV carries the RFID reader to a growing area of the plants, and the RFID reader executes the steps B2) to B7).

In another embodiment, a method of detecting water contents of plants by using a RFID signal contains steps of:
C1) providing a radio frequency identification (RFID) humidifier which includes an ultra-high frequency (UHF) radio frequency identification (RFID) tag, a RFID reader, and a fixing means configured to maintain a reading antenna of the RFID reader and the UHF RFID in a fixed reading distance;
C2) calibrating, wherein the RFID humidifier is put in an open area, a curve of the power on a tag forward or a tag backscatter signal strength of the UHF RFID tag is acquired by way of the RFID reader so as to be used as a reference value.
C3) measuring, wherein the UHF RFID tag of the RFID humidifier is moved close to a respective plant, a curve of the power on a tag forward or a tag backscatter signal strength of the UHF RFID tag is used as a measuring value;
C4) calculating a deviation between the measuring value and the reference value; and
C5) obtaining a warning signal configured to represent an abnormality of a water content of the respective plant.

A device for executing the above-mentioned method contains: an ultra-high frequency (UHF) radio frequency identification (RFID) tag, a RFID reader, and a fixing means configured to maintain a reading antenna of the RFID reader and the UHF RFID in a fixed reading distance.

The RFID reader has a microprocessor (MCU), the device is put in the open area, and the MCU is configured to control the RFID reader to acquire the curve of the power on tag forward or the tag backscatter signal strength of the UHF RFID tag to be used as the reference value.

When the UHF RFID tag is moved close to the respective plant, the MCU is configured to control the RFID reader to acquire the curve of the power on tag forward or the tag backscatter signal strength of the UHF RFID tag to be used as the measuring value, and the MCU calculates the deviation between the measuring value and the reference value.

A warning signal configured to represent the abnormality of the water content of the respective plant is sent by the MCU, when the deviation is within the predetermined range.

In another embodiment, the fixing means is a foam filler defined between the UHF RFID tag and the RFID reader so as to maintain a reading antenna of the RFID reader and the UHF RFID in the fixed reading distance.

### BRIEF DESCRIPTION OF THE DRAWINGS

FIG. 1 is a schematic view showing a device of detecting water contents of plants by using a RFID signal according to a first embodiment of the present invention.
FIG. 2 is a diagram showing a testing result of a method of detecting water contents of plants by using a RFID signal according to a second embodiment of the present invention, wherein a curve represents a curve of the power on a tag forward or a tag backscatter signal strength of the UHF RFID tag.
FIG. 3 is a schematic view showing a device of detecting water contents of plants by using a RFID signal according to the second embodiment of the present invention.
FIGS. 4-1 and 4-2 are a diagram showing a testing result of a method of detecting water contents of plants by using a RFID signal according to a third embodiment of the present invention, wherein a curve represents a curve of the power on a tag forward or a tag backscatter signal strength of the UHF RFID tag.
FIG. 5 is a cross sectional view showing a device of detecting water contents of plants by using a RFID signal according to a third embodiment of the present invention.

### DETAILED DESCRIPTION OF THE PREFERRED EMBODIMENTS

A device of detecting water contents of plants contains an ultra-high frequency (UHF) radio frequency identification (RFID) tag fixed adjacent to the plants, and a RFID reader configured to read the RFID tag, such that a tag performance or change of a RFID signal between the RFID reader and the UHF RFID tag is read to distinguish the water contents of the plants. The RFID signal includes a power on tag forward and a tag backscattered signal strength of the UHF RFID tag.

A method of detecting water contents of plants by using a RFID signal according to a first embodiment of the present invention comprises steps of:
A1) connecting a humidity sensor with a RFID chip 21 of an UHF RFID tag;
A2) moving the humidity sensor close to the plants, wherein the humidity sensor is moved in a predetermined distance close to a portion of a respective plant, wherein the predetermined distance is within 2 M to 10 M, and the portion of the respective plant is a trunk or a root, the humidity sensor is alternatively moved in the predetermined distance close to soils around the root of the respective plant;
A3) reading humidity signals of the humidity sensor successively by way of the RFID chip 21;
A4) comparing a change of the humidity signals by using the RFID chip 21, wherein when the change of the humidity signals happens, a first state value of a state tag stored in the RFID chip 21 is changed to a second state value, for example, the first state value is a digital signal 0, and the second state is a digital signal 1; and
A5) reading the state values of the RFID chip 21 by way of a RFID reader, and when one of the state values is the second state value, an abnormal signal of the water contents produces.

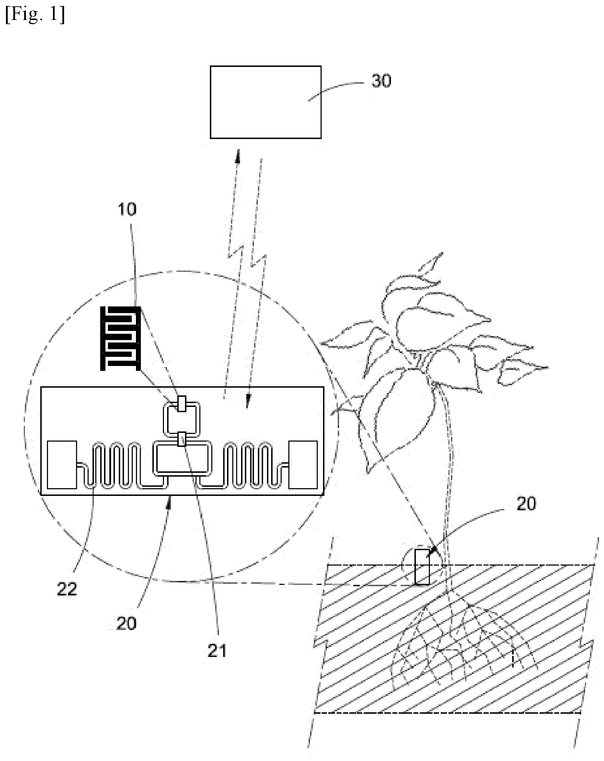

With reference to FIG. 1, a device of detecting water contents of plants by using a RFID signal according to the first embodiment of the present invention comprises: a humidity sensor 10, an ultra-high frequency (UHF) radio frequency identification (RFID) tag 20, and a RFID reader 30, wherein the UHF RFID tag 20 has a tag antenna 22 and a RFID chip 21 electrically connected with the tag antenna 22. After the humidity sensor is electrically connected with the RFID chip 21 of the UHF RFID tag, the RFID chip reads humidity signals detected by the humidity sensor and compares a change of the humidity signals, wherein when the change of the humidity signals happens, a first state value of a state tag stored in the RFID chip 21 is changed to a second state value, the RFID reader reads the state values of the RFID chip 21 successively, and when one of the state values is the second state value, an abnormal signal of the water contents produces.

The humidity sensor 10 is a capacitive humidity sensor, such as a humidity capacitor. The change of the humidity signals is a change of capacitance value signals of the capacitive humidity sensor. The humidity capacitor is made of polymer film, and the polymer film is made of any one of polystyrene, polyimide, and butyric acetate. When a change of environment humidity happens, a dielectric constant of the humidity capacitor changes to produce a change of a capacitance, wherein the change of the capacitance is proportional to a relative humidity.

In another embodiment, the humidity sensor 10 is a resistive humidity sensor, such as a humidity resistance. The change of the humidity signals is a change of resistance value signals of the resistive humidity sensor. The humidity resistance consists of a substrate and a moisture sensitive film which covers the substrate, wherein the moisture sensitive film is made of moisture sensitive material. When water vapors or moistures attach on the moisture sensitive film, a resistivity and a resistance of the humidity resistance change, thus measuring the humidity.

A method of detecting water contents of plants by using a RFID signal according to a second embodiment of the present invention comprises steps of:
B1) attaching an UHF RFID tag on the plants, wherein the UHF RFID tag is attached on a root or stem of a respective plant, and the UHF RFID tag has multiple identification (ID) codes of the plants stored therein;
B2) using a minimum activation power of the UHF RFID tag as an output power;
B3) starting the UHF RFID tag by way of a RFID reader in a fixed reading frequency and the output power;
B4) increasing the output power when the UHF RFID tag is not started and repeating the step of B3); or
B5) reading the multiple ID codes of the plants stored in the UHF RFID tag;
B6) calculating a deviation between the output power and the minimum activation power of the UHF RFID tag; and
B7) recording an abnormality between a respective ID code and a water content of a respective plant, when the deviation is within a predetermined range.

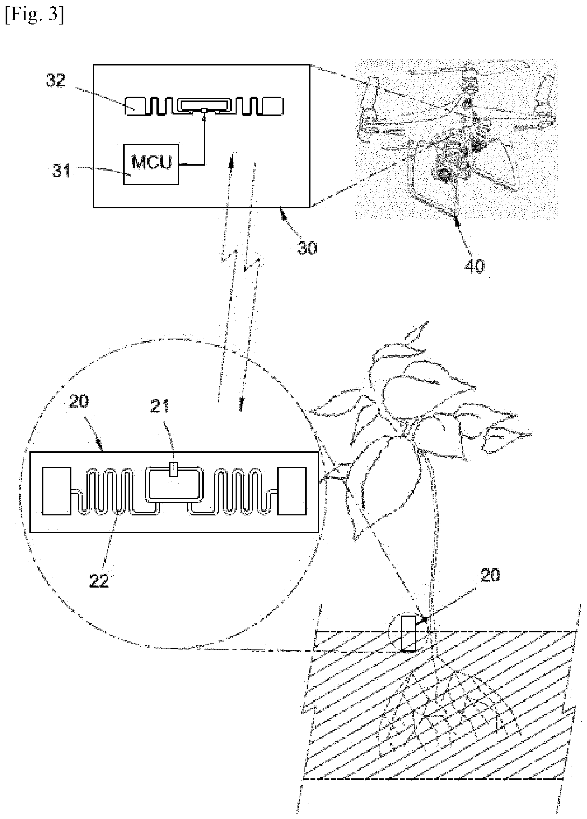

Referring to FIG. 3, a device of detecting water contents of plants by using a RFID signal according to a second embodiment of the present invention comprises: a UHF RFID tag 20 and a RFID reader 30, wherein the UHF RFID tag 20 has multiple ID codes of the plants stored therein, and the RFID reader 30 has a microprocessor (MCU) 31 configured to execute the steps B2) to B7).

In operation, the RFID reader 30 is fixed on an unmanned aerial vehicle (UAV) 40 so that the UAV 40 carries the RFID reader 30 to a growing area of the plants, and the RFID reader 30 executes the steps B2) to B7), thus obtaining the water contents of the plants.

Preferably, the respective plant has an identification (ID) code so as to distinguish the respective plant, and a respective water content of the respective plant is recorded in a computer memory.

The RFID reader 30 has a microprocessor (MCU) 31 configured to execute the steps of B2) to B7), and the respective ID code and the respective water content of the respective plant corresponding to the respective ID code are recorded in the memory of the RFID 30. Alternatively, the respective ID code and the respective water content of the respective plant are stored in a database, thus obtaining the water contents of the plants.

The predetermined range of the deviation is configured to judge whether the respective water content of the respective plant causes the abnormality. A method of obtaining the predetermined range of the deviation comprises steps of: sampling the plants, measuring a starting power (i.e. a first starting power) of the UHF RFID tag 20 attached to a water-shortage plant; and acquiring the predetermined range based on the deviation between the first starting power and the minimum activation power of the UHF RFID tag.

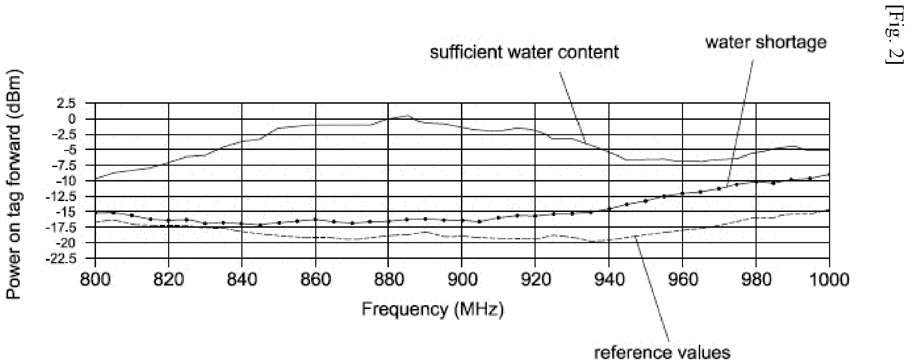

As shown in FIG. 2, a testing condition includes: plant species is a tree, an attached position of the UHF RFID tag is a root of the tree, a tag performance of the UHF RFID tag is 930 MHz, and a performance of the RFID reader is 930 MHz, wherein a curve of a reference value represents lowest starting powers of the UHF RFID tag 20 within different reading frequencies, required starting powers of the UHF RFID tag 20 attached to the water-shortage plant within different reading frequencies are denoted by a curve of a water shortage, and required starting powers of the UHF RFID tag 20 attached to a sufficient water-content plant within different reading frequencies are represented by a curve of a sufficient water content

In a testing result of FIG. 2, when the reading frequency is 920 MHz, the deviation between the starting power of the UHF RFID tag 20 attached to the water-shortage plant is 13 db, and a predetermined range of the deviation is 5 db to 18 db.

A method of detecting water contents of plants by using a RFID signal according to a third embodiment of the present invention comprises steps of:
C1) providing a RFID humidifier 50 which includes a UHF RFID tag 20, a RFID reader 30, and a fixing means configured to maintain a reading antenna 32 of the RFID reader 30 and the UHF RFID 20 in a fixed reading distance;
C2) calibrating, wherein the RFID humidifier 50 is put in an open area, a curve of the power on a tag forward or a tag backscatter signal strength of the UHF RFID tag is acquired by way of the RFID reader 30 so as to be used as a reference value;
C3) measuring, wherein the UHF RFID tag 20 of the RFID humidifier 50 is moved close to the respective plant, a curve of the power on a tag forward or a tag backscatter signal strength of the UHF RFID tag is used as a measuring value;
C4) calculating a deviation between the measuring value and the reference value; and
C5) obtaining a warning signal configured to represent the abnormality of the water content of the respective plant, when the deviation is within the predetermined range (such as 5 db to 18 db).

As illustrated in FIG. 3, a device of detecting water contents of plants by using a RFID signal according to a third embodiment of the present invention comprises: a UHF RFID tag 20, a RFID reader 30, and the fixing means configured to maintain the reading antenna 32 of the RFID reader 30 and the UHF RFID 20 in the fixed reading distance, wherein the RFID reader 30 has a microprocessor (MCU) 31. When the device is put in the open area, the MCU 31 is configured to control the RFID reader 30 to acquire the curve of the power on tag forward or a tag backscatter signal strength of the UHF RFID tag 20 to be used as the reference value When the UHF RFID tag 20 is moved close to the respective plant, the MCU 31 is configured to control the RFID reader 30 to acquire the curve of the power on tag forward or a tag backscatter signal strength of the UHF RFID tag 20 to be used as the measuring value, and the MCU 31 calculates the deviation between the measuring value and the reference value. A warning signal configured to represent the abnormality of the water content of the respective plant is sent by the MCU 31, when the deviation is within the predetermined range (such as 5 db to 18 db).

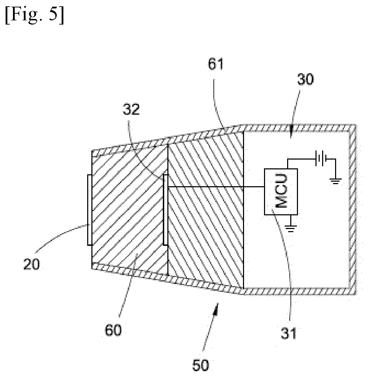

With reference to FIG. 5, the fixing means is a foam filler 60 defined between the UHF RFID tag 20 and the RFID reader 20 so as to maintain a reading antenna 32 of the RFID reader 30 and the UHF RFID 20 in the fixed reading distance.

In another embodiment, the fixing means is electromagnetic-wave shielding material 61 consisting of any one of conductive rubber, conductive cloth, a conductive cloth tape, and a metal foil layer tape.

The electromagnetic-wave shielding material 61 is covered on the foam filler 60, a part of the UHF RFID tag 20, and the RFID 30, wherein the part of the UHF RFID tag 20 exposes outside the electromagnetic-wave shielding material 61, thus avoiding influence of external environment to the UHF RFID tag 20 and the reading antenna 32.

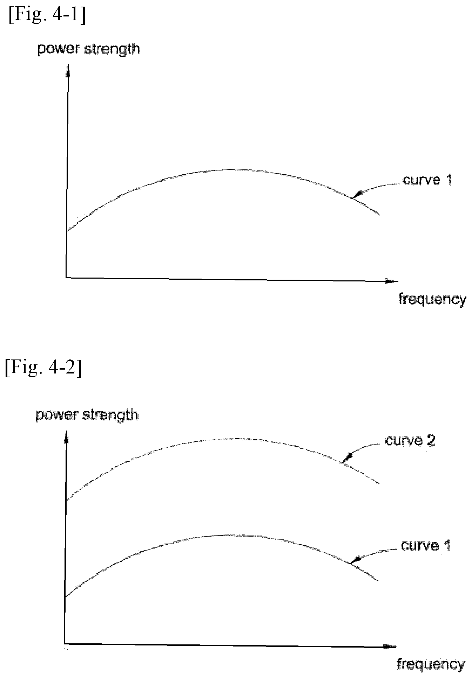

Accordingly, the device of the third embodiment is applied to measure whether the water contents of the plants is abnormal, wherein the device comprises: the UHF RFID tag 20 and the RFID reader 30, wherein the reading antenna 32 of the RFID reader 30 and the UHF RFID 20 are maintained in the fixed reading distance. In operation the device is put in an open area and is calibrated to acquire a frequency curve of a power on tag forward of the UHF RFID tag 20 or a frequency curve of a tag backscattered signal strength of the UHF RFID tag 20, such that a power-strength to frequency-curve is obtained to be used as the reference values, as shown in the curve 1 of FIG. 4-1.

After calibrating the device of the present invention, the device is moved close to the other plants to measure the frequency curve of a power on tag forward of the UHF RFID tag 20 or the frequency curve of a tag backscattered signal strength of the UHF RFID tag 20, such that a power-strength to frequency-curve is obtained to be used as the measuring values. Then, the measuring values are compared with the reference values of the calibrating step so as to obtain deviation of the power, thus judging the water content of the tree. Referring to FIG. 4-2, a curve 2 represents normal values of the plants having normal water contents, wherein the more the deviation of the power is, the higher the water contents of the plants is. The closer to the reference value is, the lower the water contents of the plants is, thus finding out the abnormality of the water contents of the plants.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A method of detecting water contents of plants by using a RFID signal comprising steps of:
A1) connecting a humidity sensor (10) with a radio frequency identification (RFID) chip (21) of an ultra-high frequency (UHF) RFID tag;
A2) moving the humidity sensor (10) close to the plants;
A3) reading humidity signals of the humidity sensor successively by way of the RFID chip (21);
A4) comparing a change of the humidity signals by using the RFID chip (21), wherein when the change of the humidity signals happens, a first state value of a state tag stored in the RFID chip (21) is changed to a second state value; and
A5) reading the state values of the RFID chip (21) by way of a RFID reader, and when one of the state values is the second state value, an abnormal signal of the water contents produces.

2. The method as claimed in claim 1, wherein the humidity sensor (10) is a capacitive humidity sensor, and the change of the humidity signals is a change of capacitance value signals of the capacitive humidity sensor.

3. The method as claimed in claim 1, wherein the humidity sensor (10) is a resistive humidity sensor, and the change of the humidity signals is a change of resistance value signals of the resistive humidity sensor.

4. The method as claimed in claim 1, wherein the first state value is a digital signal (0), and the second state is a digital signal (1).

5. A device of detecting water contents of plants by using a RFID signal comprising: a humidity sensor (10), an ultra-high frequency (UHF) radio frequency identification (RFID) tag (20), and a RFID reader (30);
wherein the humidity sensor (10) is electrically connected with a RFID chip (21) of the UHF RFID tag (20), the RFID chip (21) reads humidity signals detected by the humidity sensor (10) and compares a change of the humidity signals, wherein when the change of the humidity signals happens, a first state value of a state tag stored in the RFID chip (21) is changed to a second state value, the RFID reader (30) reads the state values of the RFID chip (21) successively, and when one of the state values is the second state value, an abnormal signal of the water contents produces.

6. The device as claimed in claim 5, wherein the humidity sensor (10) is a capacitive humidity sensor, and the change of the humidity signals is a change of capacitance value signals of the capacitive humidity sensor.

7. The device as claimed in claim 5, wherein the humidity sensor (10) is a resistive humidity sensor, and the change of the humidity signals is a change of resistance value signals of the resistive humidity sensor.

8. The device as claimed in claim 5, wherein the first state value is a digital signal (0), and the second state is a digital signal (1).

9. A method of detecting water contents of plants by using a RFID signal comprising steps of:
B1) attaching an ultra-high frequency (UHF) radio frequency identification (RFID) tag (20) on the plants, wherein the UHF RFID tag (20) has multiple identification (ID) codes of the plants stored therein;
B2) using a minimum activation power of the UHF RFID tag (20) as an output power;
B3) starting the UHF RFID tag (20) by way of a RFID reader (30) in a fixed reading frequency of and the output power;
B4) increasing the output power when the UHF RFID tag (20) is not started and repeating the step of B3); or
B5) reading the multiple ID codes of the plants stored in the UHF RFID tag (20);
B6) calculating a deviation between the output power and the minimum activation power of the UHF RFID tag (20); and
B7) recording an abnormality between a respective ID code and a water content of a respective plant, when the deviation is within a predetermined range.

10. The method as claimed in claim 9 further comprising a step of fixing the RFID reader (30) on an unmanned aerial vehicle (UAV) (40) so that the UAV (40) carries the RFID reader (30) to a growing area of the plants, and the RFID reader (30) executes the steps B2) to B7).

11. The method as claimed in claim 9, wherein a predetermined range of the deviation is 5 db to 18 db.

12. A device for executing the method of claim 9 comprising: the UHF RFID tag (20) and the RFID reader (30), wherein the UHF RFID tag (20) has the multiple ID codes of the plants stored therein, and the RFID reader (30) has a microprocessor (MCU) (31) configured to execute the steps B2) to B7).

13. The device as claimed in claim 12 further comprising an unmanned aerial vehicle (UAV) (40), wherein the RFID reader (30) is fixed on the UAV (40) so that the UAV (40) carries the RFID reader (30) to a growing area of the plants, and the RFID reader (30) executes the steps B2) to B7).

14. A method of detecting water contents of plants by using a RFID signal comprising steps of:
C1) providing a radio frequency identification (RFID) humidifier (50) which includes an ultra-high frequency (UHF) radio frequency identification (RFID) tag (20), a RFID reader (30), and a fixing means configured to maintain a reading antenna (32) of the RFID reader (30) and the UHF RFID (20) in a fixed reading distance;
C2) calibrating, wherein the RFID humidifier (50) is put in an open area, a curve of the power on a tag forward or a tag backscatter signal strength of the UHF RFID tag (20) is acquired by way of the RFID reader (30) so as to be used as a reference value;
C3) measuring, wherein the UHF RFID tag (20) of the RFID humidifier (50) is moved close to a respective plant, a curve of the power on a tag forward or a tag backscatter signal strength of the UHF RFID tag (20) is used as a measuring value;
C4) calculating a deviation between the measuring value and the reference value; and
C5) obtaining a warning signal configured to represent an abnormality of a water content of the respective plant.

15. A device for executing the method of claim 14 comprises: an ultra-high frequency (UHF) radio frequency identification (RFID) tag (20), a RFID reader (30), and a fixing means configured to maintain a reading antenna (32) of the RFID reader (30) and the UHF RFID (20) in a fixed reading distance;
wherein the RFID reader (30) has a microprocessor (MCU) (31), the device is put in the open area, and the MCU (31) is configured to control the RFID reader (30) to acquire the curve of the power on tag forward or the tag backscatter signal strength of the UHF RFID tag (20) to be used as the reference value;
wherein when the UHF RFID tag (20) is moved close to the respective plant, the MCU (31) is configured to control the RFID reader (30) to acquire the curve of the power on tag forward or the tag backscatter signal strength of the UHF RFID tag (20) to be used as the measuring value, and the MCU (31) calculates the deviation between the measuring value and the reference value;
wherein a warning signal configured to represent the abnormality of the water content of the respective plant is sent by the MCU (31), when the deviation is within the predetermined range.

16. The device as claimed in claim 15, wherein the fixing means is a foam filler (60) defined between the UHF RFID tag (20) and the RFID reader (20) so as to maintain a reading antenna (32) of the RFID reader (30) and the UHF RFID (20) in the fixed reading distance.
